# EUROPEAN PATENT SPECIFICATION

(11) **EP 1 947 070 B1**
(45) Date of publication and mention of the grant of the patent: **19.09.2018**
(21) Application number: 06810922.2
(22) Date of filing: 29.09.2006
(51) Int. Cl.: C04B 28/14, C04B 14/26, C04B 14/30, C04B 14/36, C04B 14/38, C04B 16/06, C04B 26/02, C04B 28/12, E04B 1/82, E04B 1/92, E04C 2/26

(54) **A WALL, A PARTITION, A CEILING OR A FLOOR COMPRISING GYPSUM BOARDS FOR SHIELDING RADIOACTIVE RAYS**
EINE WAND, EINE TRENNWAND, EINE DECKE ODER EIN FUßBODEN MIT GIPSPLATTEN ZUM SCHUTZ GEGEN RADIOACTIVE STRAHLUNG
UN PAROI, UNE PARTITION, UN PLAFOND OU UN PLANCHER COMPRENANT DES PLAQUES DE PLÂTRE POUR LA PROTECTION CONTRE DES RAYONS RADIOACTIFS

(30) Priority: 09.11.2005 JP 2005325017
(43) Date of publication of application: 23.07.2008
(73) Proprietor: Yoshino Gypsum Co., Ltd., Chiyoda-ku, Tokyo 100-0005 (JP)
(72) Inventor: TADA, Katsumi, Tokyo 100-0005 (JP); YAMAKATA, Kouji, Tokyo 100-0005 (JP); YOKOYAMA, Itaru, Tokyo 123-0872 (JP); KATSUMOTO, Koji, Tokyo 123-0872 (JP)
(74) Representative: Higgs, Jonathan
(86) International application number: PCT/JP2006/319543
(87) International publication number: WO 2007/055074

(56) References cited:
- WO-A-03/078349
- WO-A-2004/021811
- WO-A2-2004/021811
- DE-A1- 19 955 192
- JP-A- 05 501 271
- JP-A- 07 330 412
- JP-A- 10 100 308
- JP-A- 63 101 471
- JP-A- 2002 070 239
- US-A- 2 803 575
- US-A1- 2004 266 304
- US-A1- 2005 202 258
- GEORGE C. COALTER, PETER E. METCALFE: "Barytes Board: a cost effective radiation barrier material for use in diagnostic x-ray suites", AUSTRALAS RADIOLOGY, vol. 31, no. 1, February 1987 (1987-02), pages 90-92, XP002524358,
- UNITED FACILITIES CRITERIA: "x-ray shielding", UNIFIED FACILITIES CRITERIA, 17 November 2003 (2003-11-17),

## Description

### TECHNICAL FIELD

The present invention mainly relates to a composition for gypsum-based building material and a gypsum board formed by setting the same, particularly relates to a gypsum board with a high specific gravity useful for a partition wall having an excellent sound-insulating performance as a building material for building interiors, and also relates to radioactive-ray-shielding gypsum board capable of effectively shielding a radioactive ray from a radioactive source without using lead in radioactive-ray-utilizing facilities such as an X-ray-utilizing-facility and the like. Furthermore, it relates to a dry construction method of a sound insulation wall or the like using the above-mentioned gypsum board and a dry construction method for shielding a radioactive ray and a wall, ceiling, floor, facility and the like.

### BACKGROUND ART

A paper in the name of GEORGE C. COALTER, and PETER E. METCALFE, is known and titled "Barytes Board: a cost effective radiation barrier material for use in diagnostic x-ray suites", AUSTRALAS RADIOLOGY, vol. 31, no.1, February 1987.

As a representative gypsum-based building material, a gypsum board is provided. A gypsum board is commonly manufactured by pouring slurry (gypsum slurry) obtained by mixing a calcined gypsum and water in between top and bottom cover papers for gypsum board, forming it into a board shape, roughly cutting it after setting thereof, and cutting it into the size of a product after drying thereof. That is, the gypsum board obtained by the poring-forming method has a gypsum core covered with the cover papers for gypsum board and has excellent properties such as fire-proof and fire resistant properties, a sound-insulating performance, workability and an economical efficiency. Due to this performance, it has been used for a dry separation wall of rapidly becoming prevalent high-rise or super high-rise buildings recently and it has been appreciated to have excellent characteristics with respect to process suitability, weight saving, a quake following property and the like.

The dry separation wall may be post-installed during an interior finishing process separately from framework construction. This includes a stud structure provided on a lightweight steel frame (top or bottom runner) or the like installed on a framework and a non-stud structure without it, and is completed by assembling base panels such as a gypsum board, a reinforced gypsum board, a gypsum extrusion-formed board and a calcium silicate board at both sides of each basic framework such that it contains a material such as glass wool with a sound-insulating performance, fastening them by means of tapping screws or the like to form walls, and then overlaying an overlaying board on the surfaces thereof at both sides using glue in combination with staples, nails or screws. The roles of such a dry separation wall include ensuring a comfortable living environment and protecting life and property and the like in a time of disaster (fire disaster and the like) in addition to an important purpose of separating neighboring housings, and a deformation following property, out-of-plane flexural strength, impact resistance, hardness, and the like are required in addition to fire-proof and fire resistant properties. In addition, the demand for a wall, ceiling, floor and the like which have a high sound-insulating performance for prevention of sound emanating from a neighboring house or an upper or lower floor has been increased recently in regard to the quality of residence and the like in hotels, apartment buildings and apartment houses, and the like, due to a change of life style and improvement of living standards. Furthermore, a result of reconstruction for providing a higher sound-insulating performance to a separation wall, a partition wall, and the like has been required even in reforming an existing residence and the like.

It is difficult to say that a gypsum board (with a specific gravity of 0.65 - 0.9) that is generally commercially available as an overlaying board is sufficient in the hardness, out-of-plane banding rigidity and impact resistance.

Also, for a method for improving sound-insulating performance, there are provided increasing the thickness of a wall, increasing the weight of a wall by means of increasing an attached facing material (board) or use of a cavity wall (double to multiple wall) having an air-filled cavity, or the like, which are appropriately selected on a case-by-case basis depending on situations such as new construction and reforming. If the specific gravity of a facing material used for such improvement of a sound-insulating performance is higher than that of the above-mentioned commercially available gypsum board, the flexibility of the design or selection thereof can be increased.

For the purpose of solving the problem of a defect in the characteristics of the above-mentioned commercially available gypsum board such as the hardness, out-of-plane flexural strength, and impact resistance, a gypsum board with a specific gravity of 1.15 - 1.23 which is formed after a gypsum slurry for which 10 - 250 parts by weight of dihydrate gypsum is compounded into 100 parts by weight of hemihydrate gypsum is poured in between cover papers for gypsum board is disclosed in regard to a method for economically manufacturing a gypsum board with an excellent strength characteristic and a high specific gravity (for example, Japanese Patent Application Publication No. 08-325045).

Similarly, a hard gypsum board whose specific gravity is 1 - 1.6 is disclosed for which a gypsum core may be fastened by means of nails or screws, having hardness, out-of-plane flexural strength and impact resistance and including certain amounts of inorganic fibers and organic fibers dispersed in the gypsum core is covered with cover papers for gypsum board (for example, Japanese Patent Application Publication No. 08-042111).

Also, a dry separation wall provided sufficient with respect to a fire-proof property, a sound-insulating performance, a deformation following property, out-of-plane flexural strength, hardness, and the like, being lightweight and having a small wall thickness is disclosed for which a hard gypsum board of Japanese Patent Application Publication No. 08-042111 is used as an overlaying board (for example, Japanese Patent Application Publication No. 08-074358).

Also, meanwhile, a radioactive-ray-shielding material for protecting human bodies has been conventionally used in radioactive-ray-utilizing facilities, such as, for example, an X-ray examination room for medical purposes or an industrial purpose, an accelerator utilizing facility, and further an atomic energy facility, and the like. For example, lead is provided as a material that is a most-used one as a shielding material in an X-ray-utilizing facility. When lead is used as a radioactive-ray-shielding material, it is formed into a lead block shape or is used by admixing lead powder into a rubber or a sheet of a synthetic resin of vinyl chloride or the like. Also, for use of a fire resistant building material such as the above-mentioned gypsum board, a separation wall lined with a lead panel and having an X-ray protection property is disclosed (for example, Japanese Patent Application Publication No. 2005-133414).

Although lead has a high capability of shielding X-rays and is excellent as a radioactive-ray-shielding material, it has a high weight and is not easy to handle and there may be a problem from the viewpoint of influence on a human body. Recently, there is a lead-free trend in electronic instruments, paint, and the like and there is a possibility of spreading restrictions on lead use for building components. Therefore, a method has been proposed for using a barium compound (barium salts such as BaCO₃, BaSO₄, and BaCl₃) that is harmless to the human body, instead of lead, as a radioactive-ray-shielding material while it is fastened in clay, a silicone rubber, or the like (for example, Japanese Patent Application Publication No. 59-214799 and Japanese Patent Application Publication No. 05-264788).

The above-mentioned Japanese Patent Application Publication No. 08-325045 and Japanese Patent Application Publication No. 08-042111 provide gypsum-based board for building with a high specific gravity which has a strength characteristic superior to that of a conventionally commercially-available gypsum board. However, the base materials for constituting a gypsum core are a gypsum (with a specific gravity of 2.32 with respect to dihydrate gypsum) or an inorganic fiber (with a specific gravity of 2.5 - 3.0 with respect to glass fiber) and organic fiber (with a true specific gravity of about 1.5 - 1.6 with respect to cellulose fiber) and the manufacturing method thereof is to pour a gypsum slurry in which the above-mentioned materials are dispersed and mixed in water in between cover papers for gypsum board and to form it. Therefore, when a gypsum core with a high specific gravity is formed, it is necessary to increase the rate of the compounded inorganic fiber and to decrease water in slurry, and the higher the specific gravity is, not only the higher the viscosity of the slurry is so as to make the manufacture thereof difficult but also there is an upper limit on the specific gravity at which it is practical to produce.

Meanwhile, although a barium salt is utilized for a radioactive-ray-shielding function instead of lead in the radioactive-ray-shielding material disclosed in the above-mentioned Japanese Patent Application Publication No. 59-214799, the barium element is present in the form of celsian in a tile and a radioactive-ray-shielding material retaining a function of the tile is provided. However, since the material obtained is a tile, the weight is high, and when it is utilized as a building material in a facility, the utilization is necessarily limited to the tile, so that the application thereof is limited, and the construction method for the utilization thereof is also limited.

Also, since the conventionally commercially-available gypsum board, of course, has no radioactive-ray-shielding performance, a gypsum board to which a lead sheet with a thickness of 1 - 2 mm is attached has been used for utilization in a radioactive-ray-shielding facility. However, as described above, effort for lead-free will be necessary in the future but a lead-free board for buildings has not been proposed yet, at least with respect to a gypsum board.

### DISCLOSURE OF THE INVENTION

### PROBLEMS TO BE SOLVED BY THE INVENTION

The present invention was made by taking a problem as described above into consideration and an object is to provide a gypsum board which has a gypsum core with a high specific gravity and a configuration that is completely different from a conventional one, which gypsum board may be fastened by means of a nail or a screw, and which gypsum board has hardness, out-of-plane flexural strength and impact resistance, and to provide a construction method for a sound insulation wall, a sound insulation wall, etc., using such a gypsum board.

Also, another object of the present invention is to provide a gypsum board having a radioactive-ray-shielding function, being comparatively lightweight, easy to handle, harmless to the human body, capable of construction by means of screw fastening, etc., and easy to apply to a wall or a ceiling, and to provide a dry construction method for shielding radioactive rays using such a gypsum board and a radioactive-ray-shielding facility, etc., constructed thereby.

Additionally, yet another object of the present invention is to provide a composition for building material which is usable as a gap filler in a dry construction method for shielding radioactive rays or as a wet coating material such as a plaster, a joint compound and a paint for a wet method for constructing a wall, a ceiling or a floor by directly mixing itself with water.

### MEANS FOR SOLVING THE PROBLEM

The present invention was completed after an active study had been made with respect to the composition of a gypsum core and the configuration of a gypsum board in the range of practical characteristics of a building material, which particularly relates to a gypsum-based building material, based on a finding such that it is comparatively easy to make a specific gravity higher than that of a conventional one (a specific gravity in a range of 1.4 - 2.0, more particularly, in a range of specific gravity being 1.6 - 2.0, which has been difficult to achieve conventionally), wherein a base material is a combination of hydraulic a gypsum and one kind or two or more kinds of dry-hardening calcium carbonate, calcium hydroxide, or synthetic resin emulsions and a composition provided by compounding an inorganic filler with a specific gravity to it, may conduct reaction and setting or drying and setting by means of addition of water.

Also, the present invention was completed after an active study had been made with respect to a gypsum board having a radioactive-ray-shielding performance while maintaining excellent characteristics of a building material which are comparable to those of a gypsum board, such that it is easy to handle and it may be fastened for construction by means of screws, based on a finding such that a solid of a composition according to the present invention has a practical performance for shielding radioactive rays such as X-rays when a particular inorganic filler with a high specific gravity is the radioactive-ray-shielding material.

The present invention provides a wall, partition, a ceiling or a floor having a plurality of gypsum boards according to claim 1.
The invention further provides a dry construction method according to claim 3 and a radioactive ray using facility according to claim 4.

### ADVANTAGEOUS EFFECT OF THE INVENTION

A gypsum board according to the present invention has a gypsum core with a high specific gravity and a configuration that is completely different from a conventional one, may be fastened by nails or screws since this is covered with a cover sheet, and has hardness, out-of-plane flexural strength and impact resistance. Then, the sound-insulating performance of a separation wall, etc., could be improved by utilizing such a gypsum board with high specific gravity.

Also, a gypsum board according to the present invention is lead-free, has a radioactive-ray-shielding function, is comparatively lightweight, is easy to handle, is harmless to the human body, is capable of being used in construction by means of screw fastening, etc., and is easy to apply to a wall or a ceiling. Therefore, a dry construction method for shielding radioactive rays could be allowed by using a gypsum board according to the present invention for a separation wall, etc. Also, a radioactive-ray-shielding facility, etc., could be constructed by the construction method. Furthermore, a composition for building material which is useful for a gap filler in a dry construction method for shielding radioactive rays could be obtained.

### BEST MODE FOR CARRYING OUT THE INVENTION

A composition for building material according to the present example is to provide a gypsum or plaster or a reaction-setting-type or dry-setting-type joint compound. These compositions for building material are directly used as a fluid or non-fluid slurry or paste by means of addition of an adequate amount of water for a wet construction method for forming a wall, ceiling or floor, or used for filling a joint between gypsum boards arranged to be adjacent to each other or a gap between a wall and a ceiling, floor or the like in a dry wall construction method using a gypsum board according to the present example as described below.

Calcium sulfate used in the present example is a gypsum and a hydraulic gypsum is an α-type hemihydrate gypsum and/or β-type hemihydrate gypsum, wherein each hemihydrate gypsum is a calcined gypsum obtained by calcining a natural gypsum, a chemical gypsum, desuflogypsum or the like in water or atmospheric air. The α-type one is obtained by calcining in water (including steam) and the β-type one is obtained by calcining in atmospheric air. The calcined gypsum is used as a synonym for the hemihydrate gypsum below.

As a hydraulic gypsum for a composition for building material according to the present example, an α-type calcined gypsum is commonly used. However, it may be used in combination with a β-type calcined gypsum and further, if necessary, may be used in combination with a calcium carbonate or resin emulsion which is another base material as described below. When an α-type calcined gypsum is used, it is preferable to add commonly 35 - 45 % of water into the calcined gypsum so as to adjust a gypsum slurry.

As an inorganic filler for a composition for building material according to the present example, it is preferable to use a true specific gravity of 3.5 - 6.0 which is a higher specific gravity compared with the specific gravity of a base material. Specifically, barium chloride, titanium oxide, barium oxide, strontium carbonate, barium carbonate and barium sulfate may be used preferably. The respective specific gravities of inorganic fillers are shown in

**[Table 1]**

| Inorganic filler | Specific gravity | Inorganic filler | Specific gravity |
|---|---|---|---|
| Barium chloride | 3.856 | Barium oxide | 5.72 |
| Zinc oxide | 5.61 | Strontium carbonate | 3.7 |
| Aluminum oxide | 3.7 | Barium carbonate | 4.43 |
| Titanium oxide | 4.2 | Barium sulfate | 4.5 |

Among these fillers when the purpose is to obtain a solid with a high specific gravity, barium sulfate may be used more preferably in view of the price, availability, etc.

Particularly, when the purpose is to provide a solid with a radioactive-ray-shielding property, barium chloride, titanium oxide, barium oxide, strontium carbonate, barium carbonate, and barium sulfate may be used preferably, wherein titanium oxide, strontium carbonate and barium sulfate are more preferable and barium sulfate is particularly preferable in view of the radioactive-ray-shielding property and availability thereof.

If necessary, an accelerator, a retarder, an aggregate, each kind of organic polymer, an organic solvent, a surfactant as a dispersant or a foaming agent, or the like may be further added and compounded into a composition for building material according to the present example arbitrarily.

The compounding ratio of calcium sulfate and an inorganic filler is 50 - 200 parts by weight of an inorganic filler per 100 parts by weight of calcium sulfate when a gypsum board is formed. If less than 50 parts by weight of an inorganic filler is provided, no gypsum board with a high specific gravity may be attained or the radioactive-ray-shielding property of a solid of composition for building material or gypsum core material may be insufficient. In the case of a gypsum board, if more than 200 parts by weight of an inorganic filler is provided, the setting and forming property of a gypsum core may be insufficient so as not to obtain a necessary property of a solid. In the case of a gypsum board, a preferred compounding ratio of an inorganic filler is 80 - 170 parts by weight and 100 - 140 parts by weight are more preferable. Additionally, the content of an inorganic filler is set at 30 - 97 % by weight relative to the total weight of the solid in the case of a composition for building material. 40 - 90 % by weight is preferable and 44 - 80 % by weight is more preferable. Also, the content is set at 30 - 80 % by weight relative to the total weight of a gypsum core in the case of a gypsum board. 40 - 70 % by weight is preferable and 44 - 67 % by weight is more preferable.

For a cover sheet used in the example of the subject application, a glass fiber tissue or a cover paper for gypsum board is used.

The glass fiber tissue is preferably in the form of a woven fabric, a knit, or a non-woven fabric bonded with an appropriate synthetic resin or a web. One face of a glass fiber tissue may be coated with an appropriate synthetic resin, for example, a synthetic resin coat layer impregnated with an acryl resin or the like to a portion at an arbitrary depth. A part or all of the glass fiber tissue is embedded in a surface of a core material, wherein when all is embedded, a smooth and continuous film of gypsum is necessarily formed on an outside surface of the glass fiber tissue and it is preferable to locate the glass fiber tissue as close to the surface of the core material, that is, the surface of a gypsum board as possible.

A cover paper may be used for covering a gypsum core which commonly has a basis weight of 70 - 300 g/m² and has conventionally been used for a gypsum board.

A gypsum board according to the present example has a radioactive-ray-shielding performance, the inorganic filler is barium chloride, titanium oxide, barium oxide, strontium carbonate, barium carbonate, or barium sulfate, more preferably, titanium oxide, a strontium carbonate compound, or barium sulfate, and most preferably, barium sulfate, in view of comparisons with respect to the radioactive-ray-shielding performances per unit content. In this case, the specific gravity of a gypsum board is 0.8 - 2.0 and preferably 1.0 - 1.6. Also, when the specific gravity is less than 0.8, the content of an inorganic filler which is necessary for retaining the radioactive-ray-shielding performance may be lacked. Also, if the specific gravity is more than 2.0, a disadvantageous crack may be generated at the time of nailing so that a gypsum board may not be fastened on a base or it may be bent per se depending on the strength of a fastener such as a nail so that fastening and fastening are not attained.

For a fiber compounded in a gypsum core in the present example, an organic fiber, an inorganic fiber, or a mixture is provided and an organic fiber and an inorganic fiber may be used in combination.

For an inorganic fiber, a mineral fiber such as a rock wool and sepiolite, a glass fiber, a carbon fiber, and the like are provided and a glass fiber or a carbon fiber is preferable. For an organic fiber, various kinds of organic fibers are usable, and an aramid, a cellulose (including a pulp fiber, in particular, a disintegrated waste paper), an acryl (including a polyacrylonitrile), a polyester (including a polyethylene terephthalate), a polyolefin (including a polyethylene or a polypropylene) or a polyvinyl alcohol may be used preferably.

In order to improve the dispersion properties of these fibers in a gypsum core, it is preferable to cover the surface of a fiber with a calcined gypsum by, for example, mixing the fiber with the calcined gypsum, or to be provided to a mixing machine for mixing a calcined gypsum, water, etc., such as a mixer, after surface treatment with, for example, a polyethylene oxide providing a shrink property and a dispersion property in contacting water. Thus, when a fiber surface is subjected to coating with a calcined gypsum or dispersing agent, it is considered that the fiber is readily and uniformly dispersed in a slurry and mixed in a set gypsum body so that the fiber serves as a binder for the set body. As a result, even if fastening is made by means of screws or nailing when a hard gypsum board is fastened and fastened on an underlying material, it is expected that no crack may be generated in the hard gypsum board and a sufficient out-of-plane flexural strength and an improved impact resistance may be obtained. Particularly, when an inorganic fiber and an organic fiber are used in combination, prevention of cracking is preferably enhanced.

The additive amount of such a fiber is 1 - 5 parts by weight per 100 parts by weight of a calcined gypsum, preferably 1.2 - 4 parts by weight, and more preferably 1.5 - 3 parts by weight. In regard to the form of a fiber, a diameter of 5 - 50 microns and a length of 3 - 12 mm are preferable from the viewpoints of the quality and the manufacture, and a diameter of 10 - 20 microns and a length of 3 - 6 mm are particularly preferable. Also, the fiber may be in a net (grid) shape. Additionally, when an inorganic filler and an organic filler are used in combination, the proportion thereof is preferably 1: 0.05 - 0.1: 1 (weight ratio). Also, the usage of an organic filler is preferably at most 2.0 parts by weight per 100 parts by weight of a calcined gypsum, and if more than this amount of an organic fiber is mixed, the fluidity of a slurry (gypsum slurry) may be decreased, which is not preferable in view of manufacturing.

Additionally, a gypsum board may contain various kinds of additives such as an aggregate, a foam stabilizer, an anti-foaming agent, an adhesion assistant such as a starch, a waterproofing agent, an accelerator, a retarder, a moisture-absorbing-and-desorbing agent, formaldehyde-adsorbing-and-decomposing agent, an activated carbon, and a VOC (volatile organic compound)-adsorbing agent, which have been used conventionally, in view of the quality or manufacture, as far as the effect of the present example is not impaired.

When a dispersant is used in a method for manufacturing a gypsum board according to the present example, the amount of water mixed together with a calcined gypsum may be reduced, whereby the strength of a product is increased and further the energy for drying may be reduced, which are advantageous for manufacture of the gypsum board. For the dispersant, any of dispersants such as naphthalene-based, lignin-based, melamine-based, polycarboxylic acid-based and bisphenol-type ones may be used. The additive amount is 2 parts by weight or less, preferably 0.1 - 1.5 parts by weight, per 100 parts by weight of a gypsum.

Also, mixing of a bubble into a slurry is not necessarily required in manufacture of a gypsum board but when a mixed air bubble is present in a set gypsum body, it preferably contributes to prevention of cracking at a time when a gypsum board is fastened by means of screws or nails. When a foaming agent is used, the additive amount of the foaming agent is preferably 0.05 parts by weight or less per 100 parts by weight of a calcined gypsum. Additionally, a lightweight aggregate may also be used instead of a foaming agent or in combination with a foaming agent.

The gypsum board according to the present example is used for a partition wall, ceiling board, or flooring of any of various buildings for improving each kind of strength thereof.

For example, when a sound absorbing material such as a glass wool and a rock wool is provided to a hollow portion of a sound-insulating hollow structure in which facing materials are arranged on both sides of a stud and combinations of a gypsum board according to the example of the subject application as an overlay and a commercially available normal gypsum board or another board for building as an underlay are used for the facing materials on both sides, the sound-insulating performance of a partition wall may be improved.

Also, in regard to reforming of an existing residence, the sound-insulating performance may be improved by additionally applying a gypsum board or boards with a high specific gravity according to the present example on one face or both faces of a partition wall or separation wall having a hollow portion. Also, the sound-insulating performance of an existing reinforced-concrete (RC) wall may be improved by "slaking" so as to form a hollow portion and applying a gypsum board with a high specific gravity according to the present example.

The X-ray-shielding performance is expressed as the thickness of a lead sheet in the unit of lead equivalent (mmPb). For example, 1 mmPb corresponds to an X-ray-shielding performance equivalent to that of a lead sheet with a thickness of 1 mm and to a concrete thickness of 10 cm. For a wall of a usual X-ray room, a shielding performance of 1.5 - 2 mmPb is required.

In regard to a gypsum board having a radioactive-ray-shielding performance according to the present example, for example, when the additive amount of barium sulfate in a gypsum core is 55 percent by weight and the thickness of the gypsum core is 12.5 mm, the X-ray-shielding performance is about 0.8 mmPb. Therefore, in the case of a gypsum board with such a thickness, a required X-ray-shielding performance may be obtained by using double ones.

Additionally, in the case of construction with the gypsum board as described above, when there is a joint part or gap between gypsum boards adjacent to each other or when a gap or air space is formed at a butt part between a gypsum board and a ceiling, floor or the like, an X-ray transmits through such a gap or air space portion so that a sufficient X-ray-shielding performance may not be exerted.

For addressing such a case, when a gypsum board according to the present example is, for example, a facing material having a width and length of 90.9 cm (3 shaku) and 181.8 cm (6 shaku), respectively, a constant thickness, and 4 side surfaces, it is effective to use a facing material with substantially parallel front and back faces and at least 2 side surfaces formed to be generally perpendicular to the front and back faces. If the perpendicular side surfaces of such facing materials are butted to each other, generation of a gap or air space may be prevented. Also, for example, when a wall height of Z 181.8 cm (6 shaku) or more is required, a wall may be formed without a gap by arranging a facing material with at least 3 side surfaces formed to be perpendicular to front and back faces.

A gypsum board according to the present example which has such a perpendicular side surface may be manufactured by pouring a gypsum slurry onto a cover sheet and adjusting side edge portions in the longitudinal directions by holding them with a forming plate or the like at the time of forming into a continuous board-shaped body such that they are perpendicular to the front and back faces. With respect to the side surfaces of a gypsum board in the width directions, it may be only necessary to cut a gypsum core of the gypsum board such that they are perpendicular to each other, when it is cut into a size of product by a rotating saw or the like after the setting and drying. Additionally, when a glass fiber tissue is used as a cover sheet for manufacturing a gypsum board, the cutting is conducted such that the side surfaces are perpendicular to each other, since it may also be necessary to cut the gypsum board in the longitudinal directions by a rotating saw or the like. Of course, when a cover paper for gypsum board is used as a cover sheet, the perpendicular side surfaces of a gypsum board may also be provided by cutting it in the longitudinal directions by a rotating saw or the like.

Alternatively, although both the amount and cost of work are increased and it is complicated compared to use of a facing material having a perpendicular side surface, a composition for building material having a radioactive-ray-shielding performance according to the present example is selected for a gap at a joint part or the like and a mixed one provided by means of addition of a predetermined amount of water is filled and set. Thereby, a predetermined radioactive-ray-shielding performance may be attained.

Additionally, a composition for building material having a radioactive-ray-shielding performance may be used which is provided by mixing 50-200 parts by weight of one kind or two or more kinds of inorganic fillers selected from barium chloride, titanium oxide, barium oxide, strontium carbonate, barium carbonate and barium sulfate to 100 parts by weight of calcium sulfate.

Furthermore, for a composition for building material according to the present example, an aggregate, a cracking-preventing agent, an adhesive, a water retention agent, a coloring agent, or another additive may be further added appropriately, according to need, without impairing a characteristic of the composition according to the present example.

Additionally, the specific gravity of a set or dried body provided by adding water into a composition for building material according to the present example so as to harden it is adjusted to be in a range 0.8 - 2.0, a sufficient radioactive-ray-shielding performance may not be obtained.

Next, the present example is described based on practical examples. However, these practical examples merely show an example of the present example and the present example is not limited to these examples at all.

### [Practical examples]

### (i) Composition for building material - Filler for shielding an X-ray

### Practical examples 1 - 3 (examples 2 and 3 not according to the invention)

Compositions for building material were prepared with the materials and formulations in Table 2 and mixed by means of addition of water, so as to prepare putties for shielding an X-ray. The specific gravities of solids are shown in the same Table.

Additionally, after a joint part with a gap size of 10 mm was formed by using a radioactive-ray-shielding gypsum board according to the present example as described below and it was filled with any of the putties of practical examples 1 - 3, which were set subsequently, experiments for measuring X-ray shielding were conducted by an X-ray irradiation device under each of irradiation conditions of 100 kV - 15 mA, 125 kV - 12.5 mA, and 150 kV - 10 mA and it was confirmed that there were provided X-ray-shielding performances equivalent or superior to the gypsum board as described above. Any of the putties of practical examples 1 - 3 provided a lead equivalent of about 0.05 mmPb under the irradiation condition of 100 kV - 15 mA per 1 mm thick.

**[Table 2]**

| Composition | | | Practical example 1 | Practical example 2 | Practical example 3 |
|---|---|---|---|---|---|
| Composition | Base material | Hemihydrate gypsum (calcined gypsum) | 40 | | |
| | | Calcium carbonate | | 2 | |
| | | Calcium hydroxide | | | 39 |
| | | Vinyl acetate resin emulsion | | 3 | 2 |
| | Inorganic filler - barium sulfate | | 59 | 79 | 58 |
| | Total amount of other additives *1 | | 1 | 16 | 1 |
| | Total (parts by weight) | | 100 | 100 | 100 |
| Characteristics | Setting type | | Reaction | Drying | Reaction and drying |
| | Specific gravity of solid | | 1.55 | 1.61 | 1.46 |
| | Lead equivalent per 1 mm thick (mmPb) | | About 0.05 | About 0.05 | About 0.05 |

| | | | | | |
|---|---|---|---|---|---|
| *1: cracking-preventing agent, aggregate for preventing sliming, adhesion-improving agent, water retention agent, thickening agent, fluidity-improving agent, antifreezing agent, mildewproofing agent, etc. | | | | | |

### (ii) Practical examples for a method of manufacturing a gypsum board with a high specific gravity and evaluation results thereof.

### Practical examples 4 - 10 (examples 4, 10 and R1 not according to the invention.

Any of slurries (gypsum slurries) with formulations shown in Table 3 was prepared by using a mixer, was poured in between two cover papers (commonly used for a gypsum board with a weight of 250 g/m²), and passed through a forming machine to form a gypsum board with a thickness of 12.5 mm and width of 910 mm, which was roughly cut into a predetermined size, dried by a drying machine, and cut into one with a length of 1820 mm so as to obtain a gypsum board. Herein, a used glass fiber had a shape of a diameter of 20 microns and length of 3.3 mm and was mixed with a calcined gypsum to be mixed, before being fed to the mixer, such that the surface of the fiber was covered with the calcined gypsum. A pulp fiber was used which had been provided by disintegrating a waste paper. Also, a melamine-type dispersant was used for the dispersant. Additionally, in the Table, R1 is a comparative example, wherein a small amount of sodium alkylbenzenesulfonate was added as a foaming agent.

For these gypsum boards, the results of measurement of test items shown in Table 4 described below are also shown in addition to Table 3.

**[Table 3]**

| | Practical example No. | | 4 | 5 | 6 | 7 | 8 | 9 | 10 | R1 |
|---|---|---|---|---|---|---|---|---|---|---|
| Gypsum core composition | Calcined gypsum | | 100 | 100 | 100 | 100 | 100 | 100 | 100 | 100 |
| | Aluminum oxide | | 120 | | | | | | | |
| | Titanium oxide | | | 120 | | | | | | |
| | Strontium carbonate | | | | 120 | | | | | |
| | Barium sulfate | | | | | 80 | | | | |
| | Barium sulfate | | | | | 80 | | | | |
| | | | | | | | 120 | | | |
| | | | | | | | | 160 | | |
| | | | | | | | | | 200 | |
| | Glass fiber | | 2 | 2 | 2 | 2 | 2 | 2 | 2 | 2 |
| | Pulp fiber | | | | | | | | 1 | |
| | Dispersant | | 0.6 | 0.6 | 0.6 | 0.6 | 0.6 | 0.6 | 0.9 | 0.6 |
| Gypsum board characteristics | Specific gravity | | 1.40 | 1.41 | 1.40 | 1.35 | 1.42 | 1.72 | 2.04 | 1.2 |
| | X-ray shielding property (mmPb) | 100kV - 15mA | - | 0.14 | 0.37 | 0.66 | 0.84 | 1.11 | 1.15 | 0.08 |
| | | 150kV - 10mA | - | 0.11 | 0.24 | 0.38 | 0.46 | 0.66 | 1.01 | 0.07 |
| | Screw drawing strength | | ○ | ○ | ○ | ○ | ○ | ○ | ○ | ○ |
| | fire-proof property | | ○ | ○ | ○ | ○ | ○ | ○ | ○ | ○ |
| | Deformation following property | | ○ | ○ | ○ | ○ | ○ | ○ | ○ | ○ |
| | Out-of-plane flexural strength | | ○ | ○ | ○ | ○ | ○ | ○ | ○ | ○ |
| | Surface hardness | | ○ | ○ | ○ | ○ | ○ | ○ | ○ | ○ |
| | Impact resistance (heavy) | | ○ | ○ | ○ | ○ | ○ | ○ | ○ | ○ |
| | Bending fracture load | | ○ | ○ | ○ | ○ | ○ | ○ | ○ | ○ |
| | Nailing test | | ○ | ○ | ○ | ○ | ○ | ○ | ○ | ○ |

**[Table 4]**

| Test item | Test method | Criterion |
|---|---|---|
| Screw drawing strength | According to JIS Z2121 "Nail drawing resistance of wood, Screw drawing test method", a screw nail (φ 4.0, 35 mm) screwed in a specimen was drawn straight and the maximum drawing strength was measured. | 75 kg or more |
| fire-proof property | According to Showa 45 (1970) Construction Ministry's Announcement No. 1828, a surface test and a base material test were conducted. | Non-combustible |
| Deformation following property | According to JIS A1414 - 6.18 "Deformability test on an assembled nonbearing panel by means of in-plane share", a displacement of 1/200 was provided and the displacement of each point of measurement was measured at each displacement and the condition of a surface was observed. | No abnormality |
| Out-of-plane flexural strength | According to (Found.) Better Living interior system test method "Distributed pressure strength test", a specimen was horizontally pressurized by means of a force of 180 kg and the displacement versus the pressure was measured and the condition of the specimen was observed. | 15 mm or less |
| Surface hardness (impact resistance (light)) | A 1 kg steel ball was dropped onto a specimen from a height of 1 m and the depth of a recess on the surface thereof was measured. | 1 mm or less |
| Impact resistance (heavy) | A 15 kg sand bag was gravity-dropped from a height of 45° by means of a rope with a length of 1 m and the amount of deformation was measured. | 8 mm or less |
| Bending fracture load | According to JIS A 1408 "Bending test method for boards for building, etc.", it was conducted. | 100 kg or more |
| Nailing test | Cracking, etc., at the time of nailing was observed by using a wire nail with a length of 32 mm. | No abnormality |
| X-ray shielding performance test | According to JIS Z 4501 "Lead equivalent test method for an X-ray protective product", a lead equivalent was obtained by measuring an amount of transmitted X-rays while X-rays were emitted from a Philips "MG-161-type" X-ray device at a tube voltage of 100 - 150 kV and a tube current of 15 - 10 mA and a Toyo-Medic "RAMTEC-1000D-type" ionization chamber exposure rate meter was used. | Lead equivalent under X-ray irradiation conditions of 100 kV - 15 mA and 150 kV - 10 mA |

### (iii) Practical examples for a method of manufacturing a gypsum board for shielding radioactive rays and evaluation results thereof

### Practical examples 11 - 12

Any of slurries (gypsum slurries) with formulations shown in Table 5 was prepared by using a mixer, was poured in between two glass fiber tissues (glass mat non-woven fabrics), and passed through a forming machine so as to form a gypsum board with a thickness of 12.5 mm. After this was dried, cutting was made such that side edge parts in the longitudinal directions were perpendicular to side surfaces in the width directions, thereby obtaining a gypsum board.

Herein, the glass fiber tissues covered both the top and bottom surfaces of a gypsum core in practical example 11 and comparative example 2 and were arranged to be embedded at about 1 mm inward from both of the top and bottom surfaces in practical example 12. Also, a method for manufacturing such a glass fiber gypsum board is disclosed in Japanese Examined Patent Application Publication No. 62-4233, Japanese Examined Patent Application Publication No. 63-65482, Japanese Examined Patent Application Publication No. 1-26845, etc.

A used glass fiber had a shape of a diameter of 20 microns and length of 3.3 mm and was mixed with a calcined gypsum to be mixed, before being fed to the mixer, such that the surface of the fiber was covered with the calcined gypsum. Also, a melamine-type dispersant was used for the dispersant. Additionally, in the Table, R2 is a comparative example.

For these gypsum boards, the results of measurement of test items shown in Table 4 described below are also shown in addition to Table 5.

**[Table 5]**

| | Practical example No. | | 11 | 12 | R2 |
|---|---|---|---|---|---|
| Gypsum core composition | Calcined gypsum | | 100 | 100 | 100 |
| | Barium sulfate | | 120 | 120 | |
| | Glass fiber | | 2 | 2 | 2 |
| | Dispersant | | 0.6 | 0.6 | 0.6 |
| Gypsum board characteristics | Specific gravity | | 1.41 | 1.41 | 1.2 |
| | X-ray-shielding property (mmPb) | 100 kV - 15 mA | 0.84 | 0.84 | 0.08 |
| | | 150 kV - 10 mA | 0.46 | 0.46 | 0.07 |
| | Screw drawing strength | | ○ | ○ | ○ |
| | fire-proof property | | ○ | ○ | ○ |
| | Deformation following property | | ○ | ○ | ○ |
| | Out-of-plane flexural strength | | ○ | ○ | ○ |
| | Surface hardness | | ○ | ○ | ○ |
| | Impact resistance (heavy) | | ○ | ○ | ○ |
| | Bending fracture load | | ○ | ○ | ○ |
| | Nailing test | | ○ | ○ | ○ |

### (iv) Practical example of a dry construction method for a sound insulation partition wall, etc.

### Practical example 13

Each of the gypsum boards with a thickness of 12.5 mm which were manufactured in practical examples 8 and 11 and comparative examples 4, R1 and R2 was used and applied on one surface of a lightweight steel-frame base to which a steady brace was attached, whereby a wall is formed, and the transmission loss (TL-Transmission Loss: a unit of decibel (dB)) of sound from a sound source was measured for the sound-insulating performance of a single wall.

As the gypsum boards of practical examples 8 and 11 are compared with the gypsum boards of comparative examples 4, R1 and R2, a frequency (coincidence frequency) at which the sound-insulating performance was degraded due to the resonance was changed from near about 2,500 Hertz to near about 4,000 Hertz so that it changed to a higher-pitched sound whereas the value of sound-insulating performance, TLD (Transmission Loss Difference) of the gypsum board of the comparative example was improved from 20 to 24 in regard to a sound-insulating performance level. Accordingly, it was considered that when a gypsum board with a high specific gravity according to the present invention was applied to a partition wall or the like, the sound-insulating performance was improved by the effect of increase in the weight of the wall.

### (v) Practical examples of a dry construction method for an X-ray-shielding facility

### Practical example 14

The parts of the gypsum boards prepared in practical example 11 whose edge side surfaces were cut to be perpendicular to the front surface of the board were placed in straight contact with each other so as to prepare a joint part, which part corresponded to a lead plate with a thickness of 0.84 mm under the measurement condition of 100 kV - 15 mA and a lead plate with a thickness of 0.46 mm under the measurement condition of 150 kV - 10 mA as the transmittance of X-rays through the part was measured.

### Reference example 1

The parts of the gypsum boards prepared in practical example 8 which parts were covered with cover papers, wherein the front surface of the board made an angle of 85° with respect to the edge side surface thereof, were placed in contact with each other so as to prepare a joint part, which part corresponded to a lead plate with a thickness of 0.77 mm under the measurement condition of 100 kV - 15 mA and a lead plate with a thickness of 0.33 mm under the measurement condition of 150 kV - 10 mA as the transmittance of X-rays through the part was measured. This indicates that the X-rays transmitted through the joint part compared with the results of practical example 14.

### Practical example 15

The straight joint part prepared in reference example 1 was filled with a joint compound prepared by material of practical examples 1 - 3, which joint compound was set later, and which part corresponded to a lead plate with a thickness of 0.85 mm under the measurement condition of 100 kV - 15 mA and a lead plate with a thickness of 0.46 mm under the measurement condition of 150 kV - 10 mA as the transmittance of X-rays through the part was measured, even if any of the putties was used. It was found that the transmittance of X-rays through a joint part could be prevented by using a composition for building material according to the present example as a filler for the joint part.

### <Practical examples in practical constructions>

### Reference example 2

Preparation of a gypsum board whose 4 side surfaces are formed to be perpendicular to the front surface of the board

The gypsum board of practical example 12 was cut into a size of 910 × 1820 mm such that the four side surfaces were perpendicular to the front surface. This was used for construction of an inner wall of an actual X-ray-shielding apparatus install room.

### Practical example 16

Gypsum boards of reference example 2 were singly applied on four faces of the inner walls of a room with approximately 8.3 m² for construction in which room a breast imaging X-ray (mammography) apparatus was installed.

After completion of the construction, a phantom (pseudo-object to be irradiated with X-rays) was continuously irradiated with X-rays under the conditions of 28 kV and 50 mAs and the quantity of leakage X-rays toward the outside of the room was measured by an ionization chamber-type survey meter. The results were "no detection" at all the measurement portions on the center portion and joint portion of the board.

Additionally, the designs, constructions and X-ray-shielding performance measurements of the present practical example and the following practical example 17 were conducted cooperatively together with Iken Engineering co., Ltd.

### Practical example 17

The gypsum boards of reference example 2 were doubly applied on four faces of the inner walls of a room with approximately 5.8 m² for construction, in which room an X-ray irradiation apparatus for general imaging was installed.

After completion of the construction, a phantom was continuously irradiated with X-rays under the conditions of 80 kV and 32 mAs and the quantity of leakage X-rays toward the outside of the room was measured by an ionization chamber-type survey meter. The irradiation with X-rays was conducted in two patterns of irradiation toward a wall face and irradiation toward a floor face. The results were "no detection" at all the measurement portions on the center portion and joint portion of the board.

### [Others]

Additionally, the subject application claims the priority based on Japanese Patent Application No. 2005-325017 filed on November 9, 2005.

## Claims

1. A wall, a partition, a ceiling or a floor comprising a plurality of gypsum boards, each gypsum board for shielding a radioactive ray being a facing material with a thickness of 5 - 40 mm and having a specific gravity of 0.8 - 2.0,
wherein a gypsum core formed by setting a slurry obtained by means of addition of
100 parts by weight of calcium sulfate being a hydraulic gypsum,
50 - 200 parts by weight of an inorganic filler selected from the group consisting of
barium chloride,
titanium oxide,
barium oxide,
strontium carbonate,
barium carbonate and
barium sulphate, and water is covered with one or two cover sheets,
wherein the cover sheet is a cover paper for gypsum board or a glass fibre tissue,
**characterised by** the gypsum core further containing
1 - 5 parts by weight of an inorganic fibre or organic fibre, and wherein
the gypsum board is a facing material with parallel front and back faces and
at least two side surfaces formed to be perpendicular to the front and back faces, and
wherein
the perpendicular side surfaces of the gypsum board are provided by a cut in the longitudinal directions,
wherein side surfaces of said boards are butted to each other to prevent the generation of a gap or air space.

2. The wall, partition, ceiling or floor of claim 1, wherein the inorganic fibre of the gypsum board is a glass fibre or a carbon fibre.

3. A dry construction method for shielding a radioactive ray using a wall, a partition, a ceiling or a floor as claimed in Claims 1 or 2.

4. A radioactive ray utilising facility having a wall, a partition, a ceiling or a floor as claimed in Claim 1 or 2.

## Patentansprüche

1. Wand, Trennwand, Decke oder Fußboden mit mehreren Gipsplatten, wobei jede Gipsplatte einen radioaktiven Strahl abschirmt und ein Deckmaterial mit einer Dicke von 5 - 40 mm ist und ein spezifisches Gewicht von 0,8 bis 2,0 hat, wobei ein Gipskern ausgebildet ist, indem eine Schlämme abgebunden wird, die durch Zusetzen von
100 Gewichtsteilen Kalziumsulfat, das ein hydraulischer Gips ist,
50 - 200 Gewichtsteilen eines anorganischen Füllers erhalten wird, der aus der Gruppe ausgewählt wird, die besteht aus:
Bariumchlorid,
Titanoxid,
Bariumoxid,
Strontiumcarbonat,
Bariumcarbonat und
Bariumsulfat
wobei Wasser mit einer oder zwei Deckschichten bedeckt wird,
wobei die Abdeckungsschicht ein Deckpapier für eine Gipsplatte oder ein Glasfasergewebe ist,
**dadurch gekennzeichnet, dass** der Gipskern ferner enthält:
1 - 5 Gewichtsteile einer anorganischen Faser oder einer organischen Faser, und wobei
die Gipsplatte ein Deckmaterial mit parallelen Vorder- und Rückseiten ist, und wenigstens zwei Seitenoberflächen senkrecht zu den Vorder- und Rückseiten ausgebildet sind, und
wobei
die senkrechten Seitenoberflächen der Gipsplatte durch einen Schnitt in den Längsrichtungen bereitgestellt werden,
wobei die Seitenoberflächen der Platten stumpf aneinander gefügt sind, um die Erzeugung einer Lücke oder eines Luftzwischenraums zu verhindern.

2. Wand, Trennwand, Decke oder Fußboden nach Anspruch 1, wobei die anorganische Faser der Gipsplatte eine Glasfaser oder eine Kohlenstofffaser ist.

3. Trockenbauverfahren zum Abschirmen eines radioaktiven Strahls unter Verwendung einer Wand, Trennwand, Decke oder eines Fußboden nach Anspruch 1 oder 2.

4. Einrichtung zur Nutzung radioaktiver Strahlen, die eine Einrichtung mit einer Wand, Trennwand, Decke oder Fußboden nach Anspruch 1 oder 2 verwendet.

## Revendications

1. Paroi, partition, plafond ou plancher comprenant plusieurs plaques de gypse, chaque plaque de gypse pour faire écran à un rayon radioactif étant un matériau de revêtement avec une épaisseur de 5 - 40 mm et ayant une densité spécifique de 0,8 - 2,0,
dans lequel un noyau de gypse formé par durcissement d'une suspension obtenue au moyen d'addition de
100 parties en masse de sulfate de calcium étant un gypse hydraulique,
50 - 200 parties en masse d'une charge inorganique choisie dans le groupe consistant en
chlorure de baryum,
oxyde de titane,
oxyde de baryum,
carbonate de strontium,
carbonate de baryum et
sulfate de baryum, et eau est recouverte avec une ou deux feuilles de couverture,
dans lequel la feuille de couverture est un papier de couverture pour plaque de gypse ou un tissu de fibre de verre,
**caractérisée en ce que** le noyau de gypse contient de plus
1 - 5 parties en masse d'une fibre inorganique ou fibre organique, et dans lequel
la plaque de gypse est un matériau de revêtement avec des faces avant et arrière parallèles et
au moins deux surfaces latérales formées pour être perpendiculaires aux faces avant et arrière, et
dans lequel
les surfaces latérales perpendiculaires de la plaque de gypse sont fournies par une coupe dans les directions longitudinales,
dans lequel des surfaces latérales desdites plaques butent les unes les autres pour éviter la production d'un écartement ou espace d'air.

2. Paroi, partition, plafond ou plancher selon la revendication 1, dans lequel la fibre inorganique de la plaque de gypse est une fibre de verre ou une fibre de carbone.

3. Procédé de construction à sec pour faire écran à un rayon radioactif utilisant une paroi, une partition, un plafond ou un plancher selon les revendications 1 ou 2.

4. Rayon radioactif utilisant une installation présentant une paroi, une partition, un plafond ou un plancher selon la revendication 1 ou 2.
